# EUROPEAN PATENT SPECIFICATION

(11) **EP 4 079 097 B1**
(45) Date of publication and mention of the grant of the patent: **05.02.2025**
(21) Application number: 20902743.2
(22) Date of filing: 15.12.2020
(51) Int. Cl.: H04W 80/04, H04L 12/66, H04L 65/1016, H04L 65/1069, H04L 65/1104, H04L 65/65, H04M 3/54, H04M 7/12, H04W 4/16, H04W 4/60, H04W 80/08, H04M 15/00, H04W 4/24

(54) **A SYSTEM FOR ENABLING PERSONS TO ORIGINATE CALL WITHOUT USING GSM INFRASTRUCTURE**
SYSTEM, DAS ES PERSONEN ERMÖGLICHT, ANRUFE OHNE VERWENDUNG DER GSM-INFRASTRUKTUR ZU TÄTIGEN
SYSTÈME PERMETTANT À DES PERSONNES D'ÉMETTRE UN APPEL SANS UTILISER UNE INFRASTRUCTURE GSM

(30) Priority: 16.12.2019 TR 201920374
(43) Date of publication of application: 26.10.2022
(73) Proprietor: Turkcell Teknoloji Arastirma Ve Gelistirme Anonim Sirketi, Maltepe/Istanbul (TR)
(72) Inventor: OZUMUZTOPRAK, Esra Ozlem, Gebze/ Kocaeli (TR); VATANSEVER, Koray, Gebze/ Kocaeli (TR)
(74) Representative: Perronace, Andrea
(86) International application number: PCT/TR2020/051297
(87) International publication number: WO 2021/126126

(56) References cited:
- US-A1- 2009 129 371
- US-A1- 2010 232 417
- US-A1- 2018 331 857
- US-A1- 2019 349 410

## Description

### Technical Field

The present invention relates to a system for enabling users to originate call to contact numbers registered in GSM, UMTS services over an application.

### Background of the Invention

Today, users establish communication with other persons by means of GSM; UMTS networks over SIM card in their mobile communication devices. However, users do not need to communicate, establish communication over SIM card upon development of communication protocols. Users can communicate with each other over global networks such as IP by means of various communication applications. Besides, when the current technique is examined, solutions enabling users to make call to fixed-line and/or mobile network numbers by applications such as VoIP are encountered. However, users have to pay additional fee to service provider in these solutions. In addition, users need to get a new number or minutes.

Due to above-mentioned reasons, there is need for a system for enabling a user to originate call to numbers registered in fixed-line and/or mobile communication networks (MSISDN); billing a user who originates the call over his/her current tariff without paying extra fee, by ensuring that the call origination process is carried out over IMS networks; enabling persons to originate call without using GSM infrastructure.

The United States patent document no. US20190037071**,** an application in the state of the art, discloses a system for sending voice communication request to fixed-line or mobile network numbers of users by user's phone number over an application based on over-the-top (OTT) and receiving voice communication request from fixed-line or mobile network numbers, and an operation method of this system. The system in the said invention enables users to realize high-quality call over network connections such as local area network, WiFi network by signing up over a cellular phone number from wireless devices. In the said invention, the VoIP cloud managing the internet network connections can determine the approximate location of the wireless device by performing location-based scanning over the IP address of the wireless device and can assign an alias phone number -that is suitable for the location of the wireless device- to the wireless device of the user from the database of the alias phone number used for connection routing. The alias phone number can be used for routing the call requests that are destined to the MSISDN where the user registers his/her wireless device and transmitted from the MSISDN, over the VoIP cloud and for transmitting these to the wireless device. However, this invention does not disclose identification of a call to be originated between the user and the other party on the IMS network and registration of the mobile number to the IMS network over the network and the SIP server.

US 2010/0232417 A1 discloses a telecommunication call attempt system involving a mobile phone number can be identified at a mobile telephony service provider network. Call control for the call can be moved from a circuit switched, channel access domain to an IP domain by moving control form a mobile switching controller (MSC) component to a media gateway controller (MGC) component. Signalling and routing can them be handled by an IMS core. A SIP registry (e.g., HSS or HLR) can associated enterprise applications with mobile phone numbers. Based upon SIP registry entries, the IMS core can communicate with an enterprise, and receive results from SIP applications executing in the enterprise. The results can change signalling and/or routing behaviour of the call attempt.

US2009129371 A1 concerns a system involving (i) implementation of a novel virtual mobile network (VMN) comprising virtual visitor location register (vVLR), virtual home location register (vHLR) and virtual multiple switching centre (vMSC) on an IP server responsible for managing IP call traffic administration, and (ii) implementation of a novel mobile to internet gateway (MIG) comprising an VoIP gateway for diverting call traffic from the mobile network to the IP network, and an IP server with vMSC functionality to translate routing information from the VMN to GSM network so as to appear to the GSM network as a traditional mobile operator. The system dynamically registers the subscriber to the IP network, and provides valid routing information to the MSC (Mobile Switching Centre) or public telephone switch to route the call over to the NGN (next generation network) operator in the IP space.

### Summary of the Invention

An objective of the present invention is to realize a system for enabling users to originate call to contact numbers registered in GSM, UMTS or fixed-line communication services over an application; following the call originated, charging a user who originated the call over his/her current tariff by preventing him/her from paying extra fee; enabling persons to originate call without using GSM infrastructure.

### Detailed Description of the Invention

"A System for Enabling Persons to Originate Call without Using GSM Infrastructure" realized to fulfil the objective of the present invention is shown in the figure attached, in which:

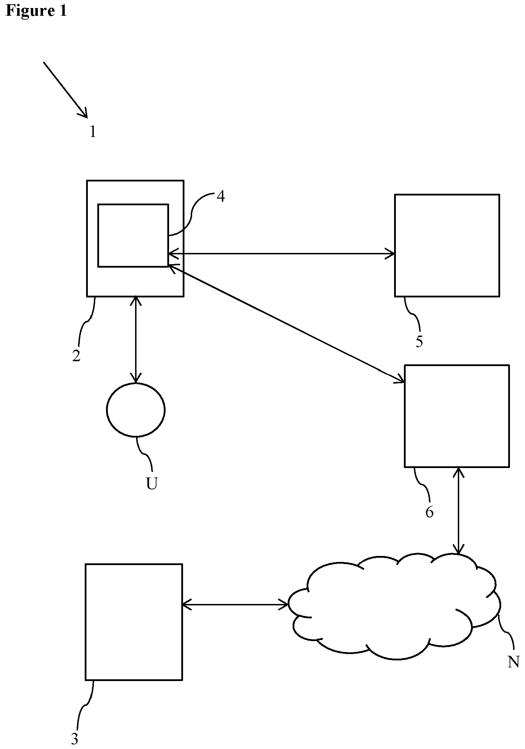

**Figure 1** is a schematic view of the inventive system for a system for enabling persons to originate call without using GSM infrastructure.

The components illustrated in the figure are individually numbered, where the numbers refer to the following:
1. System
2. Primary electronic device
3. Secondary electronic device
4. Application
5. Registry server
6. Signalling server
U. User
N. Communication network

The invention relates to a system, as further defined in claim 1, for enabling persons to originate call without using infrastructure in GSM networks.

The primary electronic device (2) included in the inventive system (1) is a device such as mobile phone, tablet, computer or smart watch used by the user (U). At least one SIM card is included on the primary electronic device (2). The primary electronic device (2) is configured to ensure that at least one mobile ID number (IMSI) and mobile number (MSISDN) is assigned to the user (U) by the SIM card included on thereof. The primary electronic device (2) is configured to convey voice data over IP.

The secondary electronic device (3) included in the inventive system (1) is a device such as mobile phone, fixed-line phone, tablet, computer or smart watch which is configured to realize data exchange with the communication network (N).

The application (4) included in the inventive system (1) is configured to transmit voice data by secure real time transport protocol (STRP) and session initiation protocol (SIP). The application (4) is configured to contain session initiation (SIP) client in itself. The application (4) is configured to transmit voice data of the user (U) to the communication network (N) by real-time transport protocol.

The application (4) is configured to enable the user (U) to initiate the registry process by the mobile number (MSISDN) on the SIM card included in his/her primary electronic device (2). The application (4) is configured to ensure that the user (U) is registered to the signalling server (6) by the mobile number in the SIM card included in the primary electronic device (2). In addition, the application (4) is configured to transmit mobile number information of the user (U) to the registry server (5) by representational state transfer (REST) interfaces by means of hypertext transfer protocol secure (HTTPS) following the first registry.

The registry server (5) included in the inventive system (1) is configured to ensure that the user (U) is registered to the application (4) by the mobile number that is identified in the SIM card included in the primary electronic device (2), and that the related mobile number is used by means of provisioning services of the mobile IMS communication network (N). The registry server (5) is configured to establish communication with the application (4) by means of representational state transfer and/or simple object access protocol (SOAP) interfaces over hypertext transfer protocol secure. In addition, the registry server (5) is configured to control whether the mobile number is a user of the GSM operator or not by means of GSM provisioning services on itself. The registry server (5) is configured to save the capability of the mobile number to make call towards mobile or fixed communication networks (N), to at least one database included on itself. The registry server (5) is configured to transmit the information about the capability of the mobile number to make call towards communication networks (N) to the application (4), by means of push notification service that contains the information about the mobile ID number (IMSI) enabling the application (4) to be registered to the mobile IMS communication network (N).

The signalling server (6) included in the inventive system (1) is configured to establish communication with the mobile IMS communication network (N) and to ensure that calls originated over the application (4) are managed by using mobile number. The signalling server (6) is configured to communicate with the application (4) and the mobile IMS communication network (N) by means of session initiation protocol (SIP). The signalling server (6) is configured to ensure that calls originated over the application (4) are transmitted to the mobile IMS communication network (N) by using the mobile number of the user (U), by ensuring that the application (4) is registered in the mobile IMS communication network (N) by using the mobile number. The signalling server (6) is configured to ensure that the mobile number remains registered in the mobile IMS communication network (N) by carrying out a register refresh transaction. The signalling server (6) is configured initiate a register refresh transaction upon the mobile number becomes subscriber to the registry state in the mobile IMS communication network (N). The signalling server (6) is configured to notify this change to the required units in case of a change occurs in the registry status of a mobile number in the mobile IMS communication network (N) and to ensure that the register transaction of the related number is refreshed when it detects that the register transaction is terminated.

In the inventive system (1), the user (U) makes a request to use the application (4) in the primary electronic device (2) and registry transactions of the necessary mobile number are carried out in the registry server (5). The user (U) originates call by using the mobile number in his/her SIM card over the application (4). The application (4) transmits the call request to the signalling server (6) by standard methods in a session initiation protocol over IP protocol together with the mobile number and mobile ID information. Then, the signalling server (6) transmits the call request to the mobile IMS communication network (N). When the number on the secondary electronic device (3), i.e. the number called by the application (4), accepts the call request; sound transmission begins between the application (4) included in the inventive system (1) and it. The application (4) transmits the voice packets to the media server that are specified by means of the signalling occurring during call set-up, of the mobile IMS communication network (N) directly. In addition, the mobile IMS communication network (N) ensures that the sound transmission between the number called and the application (4) included in the system (1) is realized bidirectionally.

With the inventive system (1), it is ensured that users can originate call to contact numbers registered in GSM, UMTS or fixed-line communication services over an application (4); following the call originated, to charge a user (U) who originated the call over his/her current tariff by preventing him/her from paying extra fee.

The invention is defined by the appended claims.

## Claims

1. A system (1) for enabling persons to originate call without using infrastructure in GSM networks which enables a user (U) to originate call to contact numbers registered in GSM, UMTS or fixed-line communication services over a communication network (N) which is a mobile IMS communication network; **comprising:**
- at least one primary electronic device (2) which is a device such as mobile phone, tablet, computer or smart watch configured to enable the user (U) to establish communication over the mobile IMS communication network (N), whereon at least one SIM card is included, which is configured to ensure that at least one mobile ID number -IMSI-and mobile number -MSISDN- is assigned to the user (U) by the SIM card included on thereof, and which is configured to convey voice data over IP;
- at least one secondary electronic device (3) which is a device such as mobile phone, fixed-line phone, tablet, computer or smart watch configured to realize data exchange with the mobile IMS communication network (N) and to ensure that the call originated from the primary electronic device (2) is answered;
and **characterized by the fact that** the system (1) comprises:
- at least one application (4) which runs on the primary electronic device (2), and is configured to:
o enable the user (U) to establish communication with the secondary electronic device (3) without using at least one GSM infrastructure, and
o enable the user (U) to initiate the registry process by the mobile number -MSISDN- on the SIM card included in his/her primary electronic device (2);
∘ transmit voice data by secure real time transport protocol and session initiation protocol - SIP- ;
- at least one registry server (5) which is in communication with the application (4) and is configured to:
∘ ensure that the user (U) is registered to the application (4) by the mobile number that is identified in the SIM card included in the primary electronic device (2); and
o wherein the mobile number is used by means of provisioning services of the mobile IMS communication network (N);
- at least one signalling server (6) which is in communication with the application (4) and is configured to:
∘ ensure that the communication initiated over the application (4) is transmitted to the secondary electronic device (3) over the mobile IMS communication network (N) by using the mobile number; and
o ensure that the application (4) is registered in the mobile IMS communication network (N) by using the mobile number.

2. The system (1) for enabling persons to originate call without using infrastructure in GSM networks according to Claim 1; **characterized by the fact that** the application (4) is configured to contain session initiation client in itself.

3. The system (1) for enabling persons to originate call without using infrastructure in GSM networks according to claim 1 or 2; **characterized by** the fact that the application (4) is configured to transmit voice data of the user (U) to the mobile IMS communication network (N) by real-time transport protocol.

4. The system (1) for enabling persons to originate call without using infrastructure in GSM networks according to any one of the preceding claims; **characterized by** the fact that the application (4) is configured to ensure that the user (U) is registered to the signalling server (6) by the mobile number in the SIM card included in the primary electronic device (2).

5. The system (1) for enabling persons to originate call without using infrastructure in GSM networks according to any one of the preceding claims; **characterized by** the fact that the application (4) is configured to transmit mobile number information of the user (U) to the registry server (5) by representational state transfer -REST- interfaces by means of hypertext transfer protocol secure -HTTPS- following the first registry.

6. The system (1) for enabling persons to originate call without using infrastructure in GSM networks according to any one of the preceding claims; **characterized by the fact that** the registry server (5) is configured to control whether the mobile number is a user of the GSM operator or not by means of GSM provisioning services on itself.

7. The system (1) for enabling persons to originate call without using infrastructure in GSM networks according to any one of the preceding claims; **characterized by the fact that** the registry server (5) is configured to save the capability of the mobile number to make call towards mobile or fixed communication networks (N), to at least one database included on itself.

8. The system (1) for enabling persons to originate call without using infrastructure in GSM networks according to any one of the preceding claims; **characterized by the fact that** the registry server (5) is configured to transmit the information about the capability of the mobile number to make call towards the mobile IMS communication network (N) to the application (4), by means of push notification service that contains the information about the mobile ID number -IMSI- enabling the application (4) to be registered to the mobile IMS communication network (N).

9. The system (1) for enabling persons to originate call without using infrastructure in GSM networks according to any one of the preceding claims; **characterized by the fact that** the signalling server (6) is configured to communicate with the application (4) and the mobile IMS communication network (N) by means of session initiation protocol -SIP-.

10. The system (1) for enabling persons to originate call without using infrastructure in GSM networks according to any one of the preceding claims; **characterized by the fact that** the signalling server (6) is configured to ensure that the mobile number remains registered in the mobile IMS communication network (N) by carrying out a register refresh transaction.

11. The system (1) for enabling persons to originate call without using infrastructure in GSM networks according to any one of the preceding claims; **characterized by the fact that** the signalling server (6) is configured initiate a register refresh transaction upon the mobile number becomes subscriber to the registry state in the mobile IMS communication network (N).

12. The system (1) for enabling persons to originate call without using infrastructure in GSM networks according to any one of the preceding claims; **characterized by the fact that** the signalling server (6) is configured to notify this change to the required units in case of a change occurs in the registry status of a mobile number in the mobile IMS communication network (N) and to ensure that the register transaction of the related number is refreshed when it detects that the register transaction is terminated.

## Patentansprüche

1. System (1), das es Personen ermöglicht, Anrufe ohne Verwendung der Infrastruktur in GSM-Netzen zu tätigen, das es einem Benutzer (U) ermöglicht, Anrufe an Kontaktnummern, die in GSM-, UMTS- oder Festnetz-Kommunikationsdiensten registriert sind, über ein Kommunikationsnetz (N) zu tätigen, das ein mobiles IMS-Kommunikationsnetz ist; **umfassend:**
- mindestens eine primäre elektronische Vorrichtung (2), bei der es sich um eine Vorrichtung wie ein Mobiltelefon, ein Tablet, einen Computer oder eine Smartwatch handelt, die zum Ermöglichen konfiguriert ist, dass der Benutzer (U) eine Kommunikation über das mobile IMS-Kommunikationsnetz (N) aufbaut, auf der mindestens eine SIM-Karte enthalten ist, die zum Sicherstellen konfiguriert ist, dass dem Benutzer (U) mindestens eine mobile ID-Nummer - IMSI - und eine Mobilfunknummer - MSISDN - durch die darauf enthaltene SIM-Karte zugewiesen wird, und die zum Übermitteln von Sprachdaten über IP konfiguriert ist;
- mindestens eine sekundäre elektronische Vorrichtung (3), bei der es sich um eine Vorrichtung wie ein Mobiltelefon, ein Festnetztelefon, ein Tablet, einen Computer oder eine Smartwatch handelt, die zum Durchführen des Datenaustausches mit dem mobilen IMS-Kommunikationsnetz (N) und Sicherstellen konfiguriert ist, dass der von der primären elektronischen Vorrichtung (2) ausgehende Anruf beantwortet wird;
und **dadurch gekennzeichnet, dass** das System (1) Folgendes umfasst:
- mindestens eine Anwendung (4), die auf der primären elektronischen Vorrichtung (2) läuft und konfiguriert ist zum:
∘ Ermöglichen, dass der Benutzer (U) eine Kommunikation mit der sekundären elektronischen Vorrichtung (3) aufbaut, ohne mindestens eine GSM-Infrastruktur zu verwenden, und
∘ Ermöglichen, dass der Benutzer (U) den Registrierungsvorgang über die Mobilfunknummer - MSISDN - auf der SIM-Karte in seiner primären elektronischen Vorrichtung (2) einleitet;
∘ Übertragen von Sprachdaten über ein sicheres Echtzeit-Transportprotokoll und ein Sitzungsinitiierungsprotokoll - SIP;
- mindestens einen Registrierungsserver (5), der mit der Anwendung (4) kommuniziert und konfiguriert ist zum:
o Sicherstellen, dass der Benutzer (U) bei der Anwendung (4) durch die Mobilfunknummer registriert ist, die auf der in der primären elektronischen Vorrichtung (2) enthaltenen SIM-Karte identifiziert ist; und
o wobei die Mobilfunknummer mittels der Bereitstellung von Diensten des mobilen IMS-Kommunikationsnetzes (N) verwendet wird;
- mindestens einen Signalisierungsserver (6), der mit der Anwendung (4) kommuniziert und konfiguriert ist zum:
∘ Sicherstellen, dass die über die Anwendung (4) eingeleitete Kommunikation über das mobile IMS-Kommunikationsnetz (N) unter Verwendung der Mobilfunknummer an die sekundäre elektronische Vorrichtung (3) übertragen wird; und
∘ Sicherstellen, dass die Anwendung (4) im mobilen IMS-Kommunikationsnetz (N) registriert ist, unter Verwendung der Mobilfunknummer.

2. System (1), das es Personen ermöglicht, Anrufe ohne Verwendung der Infrastruktur in GSM-Netzen zu tätigen, nach Anspruch 1, **dadurch gekennzeichnet, dass** die Anwendung (4) zum Enthalten eines Clients zur Sitzungseinleitung in sich selbst konfiguriert ist.

3. System (1), das es Personen ermöglicht, Anrufe ohne Verwendung der Infrastruktur in GSM-Netzen zu tätigen, nach Anspruch 1 oder 2, **dadurch gekennzeichnet, dass** die Anwendung (4) zum Übertragen von Sprachdaten des Benutzers (U) über ein Echtzeit-Transportprotokoll an das mobile IMS-Kommunikationsnetz (N) konfiguriert ist.

4. System (1), das es Personen ermöglicht, Anrufe ohne Verwendung der Infrastruktur in GSM-Netzen zu tätigen, nach einem der vorhergehenden Ansprüche, **dadurch gekennzeichnet, dass** die Anwendung (4) zum Sicherstellen konfiguriert ist, dass der Benutzer (U) beim Signalisierungsserver (6) durch die Mobilnummer in der SIM-Karte registriert ist, die in der primären elektronischen Vorrichtung (2) enthalten ist.

5. System (1), das es Personen ermöglicht, Anrufe ohne Verwendung der Infrastruktur in GSM-Netzen zu tätigen, nach einem der vorhergehenden Ansprüche, **dadurch gekennzeichnet, dass** die Anwendung (4) zum Übertragen von Informationen über die Mobilfunknummer des Benutzers (U) an den Registrierungsserver (5) über Representational State Transfer - REST - Schnittstellen mittels Hypertext Transfer Protocol Secure - HTTPS - nach der ersten Registrierung konfiguriert ist.

6. System (1), das es Personen ermöglicht, Anrufe ohne Verwendung der Infrastruktur in GSM-Netzen zu tätigen, nach einem der vorhergehenden Ansprüche, **dadurch gekennzeichnet, dass** der Registrierungsserver (5) zum Steuern mittels GSM-Bereitstellungsdiensten an sich konfiguriert ist, ob die Mobilfunknummer ein Benutzer des GSM-Betreibers ist oder nicht.

7. System (1), das es Personen ermöglicht, Anrufe ohne Verwendung der Infrastruktur in GSM-Netzen zu tätigen, nach einem der vorhergehenden Ansprüche, **dadurch gekennzeichnet, dass** der Registrierungsserver (5) zum Speichern der Fähigkeit der Mobilfunknummer, Anrufe in Richtung mobiler oder fester Kommunikationsnetze (N) zu tätigen, in mindestens einer in ihm selbst enthaltenen Datenbank konfiguriert ist.

8. System (1), das es Personen ermöglicht, Anrufe ohne Verwendung der Infrastruktur in GSM-Netzen zu tätigen, nach einem der vorhergehenden Ansprüche, **dadurch gekennzeichnet, dass** der Registrierungsserver (5) zum Übertragen der Informationen über die Fähigkeit der Mobilfunknummer, Anrufe in Richtung des mobilen IMS-Kommunikationsnetzes (N) zu tätigen, an die Anwendung (4) mittels eines Push-Benachrichtigungsdienstes konfiguriert ist, der die Informationen über die mobile ID-Nummer - IMSI - enthält, die es der Anwendung (4) ermöglicht, im mobilen IMS-Kommunikationsnetz (N) registriert zu werden.

9. System (1), das es Personen ermöglicht, Anrufe ohne Verwendung der Infrastruktur in GSM-Netzen zu tätigen, nach einem der vorhergehenden Ansprüche, **dadurch gekennzeichnet, dass** der Signalisierungsserver (6) zum Kommunizieren mit der Anwendung (4) und dem mobilen IMS-Kommunikationsnetz (N) über das Sitzungsinitiierungsprotokoll - SIP - konfiguriert ist.

10. System (1), das es Personen ermöglicht, Anrufe ohne Verwendung der Infrastruktur in GSM-Netzen zu tätigen, nach einem der vorhergehenden Ansprüche, **dadurch gekennzeichnet, dass** der Signalisierungsserver (6) zum Sicherstellen konfiguriert ist, dass die Mobilfunknummer in dem mobilen IMS-Kommunikationsnetz (N) registriert bleibt, indem er eine Registerauffrischungstransaktion durchführt.

11. System (1), das es Personen ermöglicht, Anrufe ohne Verwendung der Infrastruktur in GSM-Netzen zu tätigen, nach einem der vorhergehenden Ansprüche, **dadurch gekennzeichnet, dass** der Signalisierungsserver (6) zum Initiieren einer Registerauffrischungstransaktion konfiguriert ist, wenn die Mobilfunknummer ein Teilnehmer des Registerzustands im mobilen IMS-Kommunikationsnetz (N) wird.

12. System (1), das es Personen ermöglicht, Anrufe ohne Verwendung der Infrastruktur in GSM-Netzen zu tätigen, nach einem der vorhergehenden Ansprüche, **dadurch gekennzeichnet, dass** der Signalisierungsserver (6) zum Benachrichtigen der erforderlichen Einheiten über diese Veränderung, wenn eine Veränderung im Registrierungsstatus einer Mobilfunknummer im mobilen IMS-Kommunikationsnetz (N) auftritt, und zum Sicherstellen konfiguriert ist, dass die Registertransaktion der betreffenden Nummer aufgefrischt wird, wenn er erkennt, dass die Registertransaktion beendet ist.

## Revendications

1. Système (1) permettant à des personnes d'émettre un appel sans utiliser d'infrastructure dans des réseaux GSM, qui permet à un utilisateur (U) d'émettre un appel vers des numéros de contact enregistrés dans des services de communication GSM, UMTS ou fixes par le biais d'un réseau de communication (N) qui est un réseau de communication IMS mobile ; **comprenant :**
- au moins un dispositif électronique principal (2) qui est un dispositif tel qu'un téléphone mobile, une tablette, un ordinateur ou une montre intelligente configuré(e) pour permettre à l'utilisateur (U) d'établir une communication par le biais du réseau de communication mobile IMS (N), sur lequel au moins une carte SIM est incluse, qui est configuré pour garantir qu'au moins un numéro d'identification mobile -IMSI- et un numéro mobile -MSISDN- sont attribués à l'utilisateur (U) par la carte SIM incluse sur celui-ci, et qui est configuré pour transmettre des données vocales par IP ;
- au moins un dispositif électronique secondaire (3) qui est un dispositif tel qu'un téléphone mobile, un téléphone fixe, une tablette, un ordinateur ou une montre intelligente configuré(e) pour réaliser un échange de données avec le réseau de communication mobile IMS (N) et pour garantir que l'appel provenant du dispositif électronique principal (2) reçoit une réponse ;
et **caractérisé par le fait que** le système (1) comprend :
- au moins une application (4) qui s'exécute sur le dispositif électronique principal (2), et qui est configurée pour :
∘ permettre à l'utilisateur (U) d'établir une communication avec le dispositif électronique secondaire (3) sans utiliser au moins une infrastructure GSM, et
∘ permettre à l'utilisateur (U) d'initier le processus d'enregistrement par le numéro mobile -MSISDN- sur la carte SIM incluse dans son dispositif électronique principal (2) ;
∘ transmettre des données vocales via un protocole de transport sécurisé en temps réel et un protocole d'initiation de session -SIP- ;
- au moins un serveur de registre (5) qui est en communication avec l'application (4) et est configuré pour :
∘ garantir que l'utilisateur (U) est enregistré dans l'application (4) par le numéro mobile qui est identifié dans la carte SIM incluse dans le dispositif électronique principal (2) ; et
∘ dans lequel le numéro mobile est utilisé au moyen de services de provisionnement du réseau de communication mobile IMS (N) ;
- au moins un serveur de signalisation (6) qui est en communication avec l'application (4) et est configuré pour :
∘ garantir que la communication initiée via l'application (4) est transmise au dispositif électronique secondaire (3) par le biais du réseau de communication mobile IMS (N) au moyen du numéro mobile ; et
∘ garantir que l'application (4) est enregistrée dans le réseau de communication mobile IMS (N) au moyen du numéro mobile.

2. Système (1) permettant à des personnes d'émettre un appel sans utiliser d'infrastructure dans des réseaux GSM selon la revendication 1 ; **caractérisé par le fait que** l'application (4) est configurée pour contenir en elle-même un client d'initiation de session.

3. Système (1) permettant à des personnes d'émettre un appel sans utiliser d'infrastructure dans des réseaux GSM selon la revendication 1 ou 2 ; **caractérisé par le fait que** l'application (4) est configurée pour transmettre des données vocales de l'utilisateur (U) au réseau de communication mobile IMS (N) via un protocole de transport en temps réel.

4. Système (1) permettant à des personnes d'émettre un appel sans utiliser d'infrastructure dans des réseaux GSM selon l'une quelconque des revendications précédentes ; **caractérisé par le fait que** l'application (4) est configurée pour garantir que l'utilisateur (U) est enregistré auprès du serveur de signalisation (6) par le numéro mobile dans la carte SIM incluse dans le dispositif électronique principal (2).

5. Système (1) permettant à des personnes d'émettre un appel sans utiliser d'infrastructure dans des réseaux GSM selon l'une quelconque des revendications précédentes ; **caractérisé par le fait que** l'application (4) est configurée pour transmettre des informations de numéro mobile de l'utilisateur (U) au serveur de registre (5) par des interfaces de transfert d'état de représentation -REST- au moyen du protocole de transfert hypertexte sécurisé -HTTPS- suivant le premier registre.

6. Système (1) permettant à des personnes d'émettre un appel sans utiliser d'infrastructure dans des réseaux GSM selon l'une quelconque des revendications précédentes ; **caractérisé par le fait que** le serveur de registre (5) est configuré pour contrôler si le numéro mobile est un utilisateur de l'opérateur GSM ou non au moyen de services de provisionnement GSM à son égard.

7. Système (1) permettant à des personnes d'émettre un appel sans utiliser d'infrastructure dans des réseaux GSM selon l'une quelconque des revendications précédentes ; **caractérisé par le fait que** le serveur de registre (5) est configuré pour enregistrer la capacité du numéro mobile à effectuer un appel vers des réseaux de communication mobile ou fixe (N), dans au moins une base de données incluse dans ce dernier.

8. Système (1) permettant à des personnes d'émettre un appel sans utiliser d'infrastructure dans des réseaux GSM selon l'une quelconque des revendications précédentes ; **caractérisé par le fait que** le serveur de registre (5) est configuré pour transmettre les informations sur la capacité du numéro mobile à effectuer un appel vers le réseau de communication mobile IMS (N) à l'application (4), au moyen d'un service de notification poussée qui contient les informations sur le numéro d'identification mobile -IMSI-permettant à l'application (4) d'être enregistrée sur le réseau de communication mobile IMS (N).

9. Système (1) permettant à des personnes d'émettre un appel sans utiliser d'infrastructure dans des réseaux GSM selon l'une quelconque des revendications précédentes ; **caractérisé par le fait que** le serveur de signalisation (6) est configuré pour communiquer avec l'application (4) et le réseau de communication mobile IMS (N) au moyen d'un protocole d'initiation de session -SIP-.

10. Système (1) permettant à des personnes d'émettre un appel sans utiliser d'infrastructure dans des réseaux GSM selon l'une quelconque des revendications précédentes ; **caractérisé par le fait que** le serveur de signalisation (6) est configuré pour garantir que le numéro mobile reste enregistré dans le réseau de communication mobile IMS (N) en effectuant une transaction de rafraîchissement de registre.

11. Système (1) permettant à des personnes d'émettre un appel sans utiliser d'infrastructure dans des réseaux GSM selon l'une quelconque des revendications précédentes ; **caractérisé par le fait que** le serveur de signalisation (6) est configuré pour initier une transaction de rafraîchissement de registre lorsque le numéro mobile devient abonné à l'état de registre dans le réseau de communication mobile IMS (N).

12. Système (1) permettant à des personnes d'émettre un appel sans utiliser d'infrastructure dans des réseaux GSM selon l'une quelconque des revendications précédentes ; **caractérisé par le fait que** le serveur de signalisation (6) est configuré pour notifier ce changement aux unités requises en cas de changement de l'état de registre d'un numéro mobile dans le réseau de communication mobile IMS (N) et pour garantir que la transaction de registre du numéro associé est rafraîchie lorsqu'il détecte que la transaction de registre est terminée.
